(19) Europäisches Patentamt / European Patent Office / Office européen des brevets

(11) **EP 4 053 797 A1**

(12) **EUROPEAN PATENT APPLICATION**
published in accordance with Art. 153(4) EPC

(43) Date of publication:
**07.09.2022 Bulletin 2022/36**

(21) Application number: **20892069.4**

(22) Date of filing: **03.11.2020**

(51) International Patent Classification (IPC):
***G06T 7/90*** *(2017.01)*

(86) International application number:
**PCT/CN2020/126037**

(87) International publication number:
**WO 2021/103954 (03.06.2021 Gazette 2021/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.11.2019 CN 201911174165**

(71) Applicant: **GUANGDONG OPPO MOBILE
TELECOMMUNICATIONS
CORP., LTD.
Dongguan, Guangdong 523860 (CN)**

(72) Inventor: **GU, Haiting
Dongguan, Guangdong 523860 (CN)**

(74) Representative: **Manitz Finsterwald
Patent- und Rechtsanwaltspartnerschaft mbB
Martin-Greif-Strasse 1
80336 München (DE)**

(54) **METHOD AND APPARATUS FOR DETERMINING LIGHT SOURCE INFROMATION, ELECTRONIC DEVICE, AND STORAGE MEDIUM**

(57) Disclosed in the embodiments of the present disclosure is a method for determining light-source information, the method comprising: acquiring a first infrared-band parameter under a current environment that is output by an image sensor, the first infrared-band parameter representing the proportion of all infrared bands occupying the whole spectrum in the current environment; and, on the basis of the first infrared-band parameter, determining a light-source type and light-source scenario of a light source in the current environment. Further simultaneously disclosed in the embodiments of the present disclosure are an apparatus for determining light-source information, an electronic device, and a storage medium.

FIG. 1

EP 4 053 797 A1

**Description**

**CROSS REFERENCE TO RELATED APPLICATIONS**

The present application is based on the Chinese patent application NO. 201911174165. X, filed on November 26, 2019, and claims priority of this Chinese patent application, the entire content of the Chinese patent application is incorporated herein by reference in its entirety.

**TECHNICAL FIELD**

The present disclosure relates to but is not limited to the technical field of computer technology, and in particular to a method and an apparatus for determining light-source information, an electronic device, and a storage medium.

**BACKGROUND**

In the related art, a light-source distinction result has been applied to an indoor/outdoor judgment of white balance, so as to improve an algorithm effect of automatic white balance (AWB). However, in the related art, when distinguishing light sources, only light-source scenarios may be distinguished, but light-source types cannot be distinguished. In addition, an accuracy of the distinction result obtained by performing an existing distinguishing process for the light-source scenarios is relatively low.

**SUMMARY OF THE DISCLOSURE**

Embodiments of the present disclosure is expected to provide a method for determining light-source information and device, an electronic device, and a storage medium, to solve the following problems. In the related art, when the light sources are distinguished, only the light-source scenarios may be distinguished, but the light-source types cannot be distinguished. In addition, the accuracy of the distinction result obtained by performing the distinguishing process for the light-source scenarios is relatively low. In this way, an accurate distinction for the light-source scenarios and the light-source types may be realized.

According to a first aspect of the present disclosure, a method for determining light-source information may be provided and includes acquiring a first infrared-band parameter under a current environment output by an image sensor, wherein the first infrared-band parameter is configured to represent a proportion of all infrared bands in the current environment to a full spectrum; and determining a light-source type and a light-source scenario of a light source in the current environment based on the first infrared-band parameter.

According to a second aspect of the present disclosure, a determining apparatus of light-source information may be provided and includes an acquiring unit configured to acquire a first infrared-band parameter under a current environment output by an image sensor, wherein the first infrared-band parameter is configured to represent a proportion of all infrared bands in the current environment to a full spectrum, and a processing unit configured to determine a light-source type and a light-source scenario of a light source in the current environment based on the first infrared-band parameter.

According to a third aspect of the present disclosure, an electronic device is provided and includes a processor, a memory and a communication bus. The communication bus is configured to connect the memory and the processor, and the processor is configured to execute a determined program stored in the memory to implement operations of the above determining method of the light source.

According to a fourth aspect of the present disclosure, a storage medium is provided, storing one or more programs. The one or more programs are configured to be executed by one or more processors to implement operations of the above determining method of the light source.

The embodiments of the present disclosure provide a method for determining light-source information and device, an electronic device, and a storage medium. The method includes acquiring a first infrared-band parameter under a current environment output by an image sensor, wherein the first infrared-band parameter is configured to represent a proportion of all infrared bands in the current environment to a full spectrum; and determining a light-source type and a light-source scenario of a light source in the current environment based on the first infrared-band parameter. That is, according to the embodiments of the present disclosure, the light-source type and the light-source scenario of the light source in the current environment may be determined at least based on the proportion of all infrared bands to the full spectrum in the current environment. In this way, the following problems may be solved. In the related art, when the light sources are distinguished, only the light-source scenarios may be distinguished, but the light-source types cannot be distinguished. In addition, the accuracy of the distinction result obtained by performing the distinguishing process for the light-source scenarios is relatively low. Therefore, the accurate distinction for the light-source scenarios and the light-source types may be realized.

## BRIEF DESCRIPTION OF THE DRAWINGS

FIG. 1 is a schematic flowchart of a method for determining light-source information according to some embodiments of the present disclosure.
FIG. 2 is a schematic flowchart of another method for determining light-source information according to some embodiments of the present disclosure.
FIG. 3 is schematic view illustrating an IR% (infrared channel proportion) of three light sources according to some embodiments of the present disclosure.
FIG. 4 is a schematic diagram of a linear look-up table according to some embodiments of the present disclosure.
FIG. 5 is a schematic flowchart of a yet method for determining light-source information according to some embodiments of the present disclosure.
FIG. 6 is a structural schematic view of an apparatus for determining light-source information according to some embodiments of the present disclosure.
FIG. 7 is a structural schematic view of an electronic device according to some embodiments of the present disclosure.

## DETAILED DESCRIPTION

In order to make purposes, technical solutions and advantages of the embodiments of the present disclosure more clear, specific technical solutions of the present disclosure will be further described in detail in the following with reference to accompanying drawings in the embodiments of the present disclosure. The following examples are configured to illustrate the present disclosure, but are not intended to limit the scope of the present disclosure.
Unless otherwise defined, all technical and scientific terms used herein have a same meaning as commonly understood by one of ordinary skill in the technical field to which the present disclosure belongs. The terms used herein are only for a purpose of describing the embodiments of the present disclosure, and are not intended to limit the present disclosure.
In the following description, "some embodiments" are involved, which describe a subset of all possible embodiments, but it is understood that "some embodiments" may be a same subset of all possible embodiments or a different subset of all possible embodiments, and may be combined with each other without a conflict.
It should be noted that terms "first\ second \ third" involved in the embodiments of the present disclosure are intended to distinguish similar objects, rather than to represent a specific sequence for the objects. It is understandable that a specific order or sequence of the terms "first\ second \ third" may be interchanged in a case of being allowed, such that the embodiments of the present disclosure described herein may be implemented in a sequence other than those illustrated or described herein.
In the related art, a light source may be generally distinguished to belong an indoor light source or an outdoor light source based on infrared-band information in the industry. This distinguishing method has at least two disadvantages. First, the method of distinguishing indoor/outdoor light source is too simple and has theoretical errors. For example, in one case, a proportion of an infrared band to a full spectrum being less than 20% is considered to indicate that the light source is an indoor light source, only based on a single dimension of the infrared-band information. A distinguishing logic of this case is wrong, because a spectrum of a light source of an indoor tungsten lamp is in a gradually rising shape, which is extremely similar to a spectrum of a CIE A light source, and has a seriously high infrared proportion. When a light source with the proportion of the infrared band to the full spectrum being greater than 45% is considered to be an outdoor light source, a case that the tungsten light source is mistakenly determined to be the outdoor light source may be caused. Similarly, when the indoor light source is a mixed light source such as a mixed light source of a tungsten lamp having high infrared proportion and a fluorescent/light-emitting diode (LED) having an almost zero infrared proportion, an infrared proportion of the mixed light source may also be greater than 45%, such that the mixed light source may be mistakenly determined to be the outdoor light source. Second, less light-source types may be distinguished by the solutions of distinguishing the light source in the related art, for example, only a current light source is the outdoor light source or an indoor light source may be distinguished, a distinction for the light sources may be not accurate and fine and a case of the mixed light source may not be considered.
Terms involved in the embodiments of the present disclosure will be briefly described in the following to fully understand the method for determining light-source information provided by the embodiments of the present disclosure.

1) An automatic white balance is an algorithm of simulating a color adaptation of human eyes in a camera, and configured to restore white under different light sources to white, and restore colors captured by the camera to the colors close to those viewed by the human eyes.

2) A relative color temperature, also known as a Correlated Color Temperature (CCT), indicates that a temperature of a black body is a color temperature of a light source when a color of light transmitted by the light source is the same with a color of light radiated by the black body at a certain temperature, and the CCT is a relative value closest to a radiation temperature of the black body.

3) International Commission on Illumination (CIE) is responsible for specifying industry standards such as a spectrum of a standard light source.

4) One-dimensional lookup table (1 Dimension Lookup Table, 1D-LUT) is configured to acquire a corresponding output value through looking up a corresponding range in the 1D-LUT based on a value of an input.

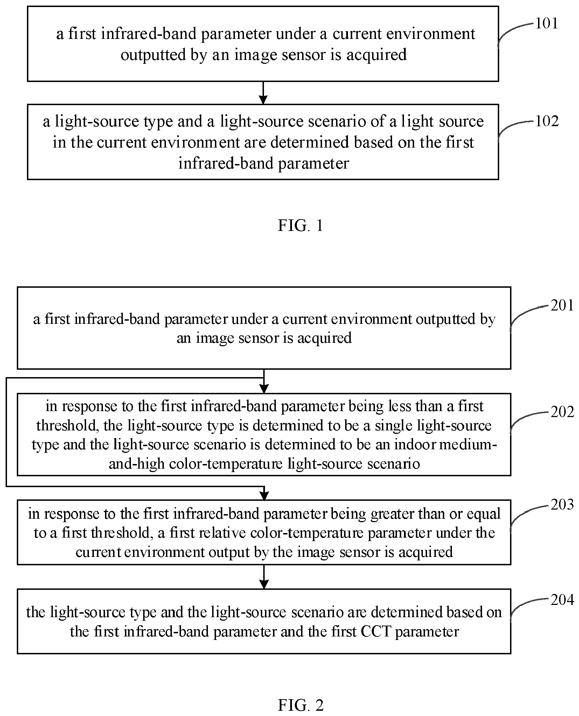

According to the above description, a method for determining light-source information is provided, and the method is applicable to an electronic device. As shown in FIG. 1, the method includes the following operations.

At block 101, a first infrared-band parameter under a current environment output by an image sensor is acquired.

In some embodiments, the first infrared-band parameter is configured to represent a proportion of all infrared bands in the current environment to a full spectrum.

In the embodiments of the present disclosure, the electronic device may include a mobile terminal device such as a mobile phone, a tablet computer, a notebook computer, a Personal Digital Assistant (PDA), a camera, a wearable device, etc., or a fixed terminal device such as a desktop computer. The electronic device may be provided with an image sensor, and the image sensor may also be referred to as a color-temperature image sensor. The image sensor has multiple channels, and different channels are configured to output different parameters. The image sensor may be configured to generate corresponding infrared-band parameters based on the parameters output by the different channels.

In an operation 102, a light-source type and a light-source scenario of a light source in the current environment are determined based on the first infrared-band parameter.

The light-source type may include a single light source and a mixed light source. The light-source scenario may include an indoor light-source scenario and an outdoor light-source scenario. Further, both the indoor light-source scenario and the outdoor light-source scenario may include light-source scenarios with different color-temperatures. For example, the indoor light-source scenarios may include an indoor low color-temperature light-source scenario and an indoor medium-and-high color-temperature light-source scenario. The outdoor light-source scenarios may include an outdoor low color-temperature light-source scenario and an outdoor medium-and-high color-temperature light-source scenario.

According to the method for determining light-source information provided by the embodiments of the present disclosure, the first infrared-band parameter under the current environment output by the image sensor is acquired. The first infrared-band parameter is configured to represent the proportion of all infrared bands in the current environment to the full spectrum. The light-source type and the light-source scenario of the light source in the current environment are determined based on the first infrared-band parameter. That is, in the embodiments of the present disclosure, the light-source type and the light-source scenario of the light source in the current environment may be determined at least based on the proportion of all infrared bands in the current environment to the full spectrum. In this way, the following problems in the related art may be solved: when distinguishing the light sources, only the light-source scenarios may be distinguished, but the light-source types cannot be distinguished; in addition, the accuracy of the distinction result obtained by performing the existing distinguishing process for the light-source scenarios is relatively low. Therefore, the accurate distinction for the light-source scenarios and the light-source types may be realized.

According to the above-described embodiments, another method for determining light-source information is provided, and the method is configured for an electronic device. As shown in FIG. 2, the method includes the following operations.

In an operation 201, a first infrared-band parameter under a current environment output by an image sensor is acquired.

In some embodiments, the first infrared-band parameter is configured to represent a proportion of all infrared bands in the current environment to a full spectrum.

In the present embodiment, an operation 202 or operations 203 to 204 may be performed after the first infrared-band parameter under the current environment output by the image sensor is acquired in the operation 201.

In the operation 202: in response to the first infrared-band parameter being less than a first threshold, the light-source type is determined to be a single light-source type and the light-source scenario is determined to be an indoor medium-and-high color-temperature light-source scenario.

In the present embodiment, the electronic device is configured to compare the first infrared-band parameter with the first threshold. When the first infrared-band parameter is determined to be less than the first threshold, the electronic device is further configured to determine that the light-source type is the single light-source type and the light-source scenario is the indoor medium-and-high color-temperature light-source scenario. For example, in the case, the electronic device is configured to determine that the light source in the current environment is the single light source and is an indoor medium-and-high color-temperature artificial light source such as a fluorescent lamp or an LED lamp, and the indoor may include an office or a shopping mall.

In the operation 203, in response to the first infrared-band parameter being greater than or equal to a first threshold, a first CCT parameter under the current environment output by the image sensor is acquired.

In the embodiments of the present disclosure, the electronic device is configured to compare the first infrared-band parameter with the first threshold. When the electronic device determines that the first infrared-band parameter is greater than or equal to the first threshold, it indicates that the light-source type may be the single light source, or may also be the mixed light source, and the light-source scenario may be an indoor light-source scenario or may also be an outdoor light-source scenario. It can be understood as a case that in response to the first infrared-band parameter being greater than or equal to the first threshold, the light-source type and the light-source scenario are complicated, and the electronic device is further configured to acquire the first CCT parameter under the current environment output by the image sensor, and take the first CCT parameter as one of bases for determining the light-source type and the light-source scenario.

In the operation 204, the light-source type and the light-source scenario are determined based on the first infrared-band parameter and the first CCT parameter.

In the embodiments of the present disclosure, based on the above description, in a case that the electronic device determines that the first infrared-band parameter is greater than or equal to the first threshold, a current light-source scenario is not directly determined to be the outdoor light-source scenario, but a CCT parameter having a different dimension with an infrared-band parameter may be acquired and further make a more accurate determination for light-source type and the light-source scenario based on parameters of more than one dimensions.

In the present embodiment, the operation 204 of determining the light-source type and the light-source scenario based on the first infrared-band parameter and the first CCT parameter may be performed by the following operations.

In an operation 204a, a second CCT parameter under a sunlight light source corresponding to the first infrared-band parameter is acquired.

In the present embodiment, after the electronic device acquires the first CCT parameter, the light-source type and the light-source scenario may be determined based on the first infrared-band parameter and the first CCT parameter, a difference between a determination result in this case and a result determined by only based on the first infrared-band parameter is small, and a determination for light-source types other than the single light source and light-source scenarios other than the indoor medium-and-high color-temperature scenario is still not accurate enough. In order to improve a determination accuracy, the electronic device is configured to acquire the second CCT parameter under the sunlight light source corresponding to the first infrared-band parameter and take the second CCT parameter, the first infrared-band parameter, and the first CCT parameter together as the bases for determining the light-source type and the light-source scenario, such that the light-source type and the light-source scenario may be accurately distinguished.

In the present embodiment, the operation 204a of acquiring a second CCT parameter under a sunlight light source corresponding to the first infrared-band parameter may be performed by the following operations.

In an operation 204a1, a linear look-up table may be acquired.

In some embodiments, the linear look-up table includes a plurality of preset infrared-band parameters and a plurality of preset CCT parameters under the sunlight light source, and each of the preset infrared-band parameters has a unique corresponding preset CCT parameter. The linear look-up table may be the 1D-LUT.

An output value and a calibration of a color-temperature sensor will be briefly introduced in the following. First, the output value of the color-temperature sensor is effective information the color-temperature sensor may provide. The color-temperature sensor may output five channel values, that is, a R channel, a G channel, a B channel, an infrared channel, and a visible light channel C. Based on the above five channels, the proportion IR% of all infrared bands to a full spectrum and a color-temperature CCT under a current scenario, that is, a sensor-CCT, may be obtained. A value of the sensor-CCT is substantially obtained through values of three channels R, G, B of the color-temperature sensor. Specifically, a measurement and calibration process and a data fitting process may be performed for the values of three channels R, G, B under different CCT light sources, and finally a formula and a method for obtaining the CCT from the values of three channels R, G, B may be established. It can be assumed that, the value of the sensor-CCT represents the information of the R, G, B channels of the color-temperature sensor.

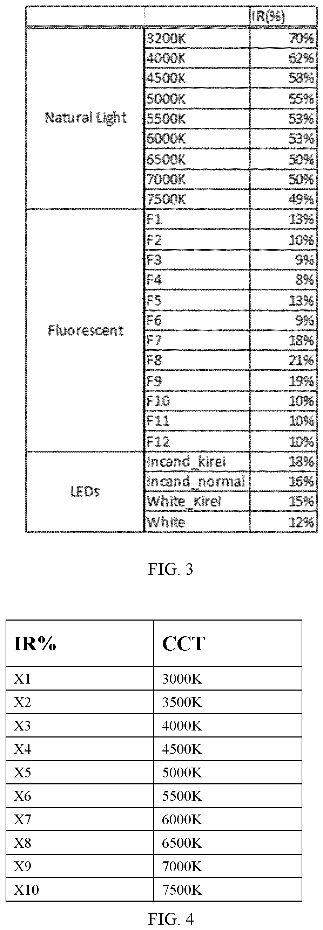

Second, an IR% situation of each known light source will be introduced in the following. As shown in FIG. 3, in actual life, the light-source types may be divided into artificial light sources and natural light sources. The artificial light sources may include the tungsten lamp, the Fluorescent lamp, and the LED lamp. The natural light sources cover a CCT range of 3000K~7500K from the early morning to the evening. Among the artificial light sources and the natural sunlight sources, the tungsten lamp and a sunlight light source having a low color temperature have the greatest IR% value, such as around 3000K, sunlight light sources ranging in 4000K~7500K have greater IR% values, and the fluorescent lamp and the LED light source have almost no IR% value.

In the present embodiment, an operation 204a2 or operations 204a3-204a6 may be performed after the operation 204a1 of acquiring the second CCT parameter under the sunlight light source corresponding to the first infrared-band parameter is performed.

In the operation 204a2, a preset CCT parameter corresponding to the first infrared-band parameter is determined to be the second CCT parameter, in response to the plurality of preset infrared-band parameters including the first infrared-band parameter.

In the present embodiment, when determining that the first infrared-band parameter exists in the plurality of preset infrared-band parameters in the linear look-up table, the electronic device is configured to determine the preset CCT parameter corresponding to the first infrared-band parameter to be the second CCT parameter.

In the operation 204a3, in response to the plurality of preset infrared-band parameters not including the first infrared-band parameter, a first preset infrared-band parameter and a second preset infrared-band parameter are selected from the plurality of preset infrared-band parameters based on a linear difference algorithm.

In the present embodiment, a preset linear look-up table cannot include all of the infrared-band parameters. Therefore, when the electronic device determines that the plurality of preset infrared-band parameters does not include the first infrared-band parameter, the electronic device is configured to select the first preset infrared-band parameter and the second preset infrared-band parameter from the plurality of preset infrared-band parameters based on the linear difference algorithm. In the present embodiment, the first preset infrared-band parameter and the second preset infrared-band parameter have a specific relationship with the first infrared-band parameter. For example, as shown in FIG. 4, the linear look-up table includes ten preset infrared-band parameters X1-X10, and values of X1-X10 in the linear look-up table are arranged in a descending order. In the case, when the first infrared-band parameter is less than X3 and greater than X4, the electronic device is configured to determine the first preset infrared-band parameter corresponding to the first infrared-band parameter to be X3, and the second preset infrared-band parameter corresponding to the first infrared-band parameter to be X4. Of course, arrangement orders of the preset infrared-band parameters and the preset CCT parameters in the linear look-up table are not specifically limited in the present embodiment, as long as the method for determining light-source information may be realized.

In the operation 204a4, a first preset CCT parameter corresponding to the first preset infrared-band parameter is determined.

In the present embodiment, the electronic device is configured to determine the first preset CCT parameter corresponding to the first preset infrared-band parameter based on the linear look-up table after acquiring the first preset infrared-band parameter. For example, the electronic device is configured to determine the first preset CCT parameter corresponding to X3 to be 4000K.

In the operation 204a5, a second preset CCT parameter corresponding to the second preset infrared-band parameter is determined.

In the present embodiment, the electronic device is configured to determine the second preset CCT parameter corresponding to the second preset infrared-band parameter based on the linear look-up table after acquiring the second preset infrared-band parameter. For example, the electronic device is configured to determine the second preset CCT parameter corresponding to X4 to be 4000K.

In the operation 204a6, the second CCT parameter is generated based on the first infrared-band parameter, the first preset infrared-band parameter, the second preset infrared-band parameter, the first preset CCT parameter, and the second preset CCT parameter.

In the present embodiment, the electronic device is configured to obtain the second CCT parameter based on a preset algorism after acquiring the first infrared-band parameter, the first preset infrared-band parameter, the second preset infrared-band parameter, the first preset CCT parameter, and the second preset CCT parameter.

In the present embodiment, the operation 204a6 of generating the second CCT parameter based on the first infrared-band parameter, the first preset infrared-band parameter, the second preset infrared-band parameter, the first preset CCT parameter, and the second preset CCT parameter may be performed by the following operations.

Step 1, a value of subtracting the first preset CCT parameter from the second preset CCT parameter is acquired and a first difference value is obtained.

Step 2, a value of subtracting the second preset infrared-band parameter from the first preset infrared-band parameter is acquired and a second difference value is obtained.

In some embodiments, the second preset infrared-band parameter is less than the first preset infrared-band parameter.

Step 3, a value of subtracting the second preset infrared-band parameter from a first parameter is acquired and a third difference value is obtained.

In some embodiments, the first parameter is obtained by multiplying the first infrared-band parameter by one hundred.

Step 4, a product of the first difference and the third difference is acquired and a second parameter is obtained.

Step 5, a value of dividing the second parameter by the second difference is acquired and a third parameter is obtained.

Step 6, a value of subtracting the third parameter from the second preset CCT parameter is acquired and the second CCT parameter is obtained.

Exemplarily, a case of the first infrared-band parameter IR1% being less than X3 and greater than X4 is still taken as an example, in the present embodiment, for a convenience of description, a value of IR1% may be 60%, and the electronic device may be configured to calculate the second CCT parameter based on the following formula.

$$\text{The second CCT parameter} = \frac{60-X4}{X3-X4} \times \text{the first preset CCT parameter} + \left(1 - \frac{60-X4}{X3-X4}\right) \times \text{the second preset CCT parameter}.$$ Further, combined with parameters in FIG. 4, another formula may be obtained, that is,

$$\text{the second CCT parameter} = \frac{60-X4}{X3-X4} \times 4000 + \left(1 - \frac{60-X4}{X3-X4}\right) \times 4500.$$

In the present embodiment, after the operation 204a of acquiring a second CCT parameter under a sunlight light source corresponding to the first infrared-band parameter, an operation 204b may be performed.

In an operation 204b, the light-source type and the light-source scenario are determined based on the first CCT parameter and the second CCT parameter.

In the present embodiment, the first CCT parameter may be referred to as the sensor-CCT, and the second CCT parameter may be referred to as IR-CCT. Further, after determining the first CCT parameter and the second CCT parameter, the electronic device may be configured to determine the light-source type and the light-source scenario based on the relationship between a relationship between the first CCT parameter and the second CCT parameter.

In the present embodiment, the operation 204b of determining the light-source type and the light-source scenario based on the first CCT parameter and the second CCT parameter may be performed by the by the following operations.

In an operation 204b1, an absolute value of a difference between the first CCT parameter and the second CCT parameter is acquired.

In an operation 204b2, a relationship between the absolute value and a second threshold is determined.

In the present embodiment, the relationship between the absolute value and the second threshold is configured to represent a magnitude or size relationship between the absolute value and the second threshold.

In an operation 204b3, the light-source type and the light-source scenario are determined based on the relationship.

In the present embodiment, after acquiring the relationship between the absolute value and the second threshold, the electronic device is configured to determine the light-source type and the light-source scenario based on the magnitude relationship between the absolute value and the second threshold which is represented by the relationship.

In the present embodiment, the operation 204b3 of determining the light-source type and the light-source scenario based on the relationship may be performed by an operation 204b31 or operations 204b32 to 204b34 in the following.

In the operation 204b31, in response to the relationship representing the absolute value is greater than or equal to the second threshold, the light-source type is determined to be a mixed light-source type and the light-source scenario is determined to be an indoor light-source scenario or an indoor-and-outdoor light-source scenario.

In the present embodiment, the electronic device is configured to determine the light-source type to be the mixed light-source type and the light-source scenario to be the indoor light-source scenario or the indoor-and-outdoor light-source scenario, in response to determining the relationship representing the absolute value is greater than or equal to the second threshold.

In the operation 204b32, in response to the relationship representing the absolute value is less than the second threshold, the light-source type is determined to be a single light-source type.

In the present embodiment, the electronic device is configured to determine the light-source type to be the single light-source type in response to determining the relationship representing the absolute value is less than the second threshold. A specific type of a single light-source scenario may be determined through performing the following operations 204b33 to 204b34.

In the operation 204b33, a minimum value of the first CCT parameter and the second CCT parameter is determined.

In the operation 204b34, the light-source scenario is determined based on the minimum value and a third threshold.

In another embodiment, the operation 204b34 of determining the light-source scenario based on the minimum value and a third threshold may be performed by the following operation A1 or A2.

A1, in response to the minimum value being greater than or equal to the third threshold, the light-source scenario is determined to be an outdoor medium-and-high color-temperature light-source scenario.

In the present embodiment, after determining the minimum value being greater than or equal to the third threshold, the electronic device is configured to determine the light-source scenario to be the outdoor medium-and-high color-temperature light-source scenario, such as an outdoor sunlight light-source scenario, including an outdoor morning sunlight light-source scenario, an outdoor noon sunlight light-source scenario, and an outdoor afternoon sunlight light-source scenario.

A2, in response to the minimum value being less than the third threshold, the light-source scenario is determined to be an indoor low color-temperature light-source scenario or an outdoor low color-temperature light-source scenario.

In the present embodiment, the electronic device is configured to determine the light-source scenario to be the indoor low color-temperature light-source scenario or the outdoor low color-temperature light-source scenario, in response to determining the minimum value being less than the third threshold. Exemplary, the indoor low color-temperature light-source scenario may include an indoor tungsten light-source scenario, and the outdoor low color-temperature light-source scenario may include an outdoor evening natural light source and an outdoor morning natural light source.

In a yet embodiment, the operation 204b34 of determining the light-source scenario based on the minimum value and a third threshold may be performed by the following operations B 1 to B2 or the operations Bland B3.

B1, in response to the minimum value being less than the third threshold, a second infrared-band parameter and a third infrared-band parameter under the current environment output by the image sensor are acquired.

In some embodiments, the second infrared-band parameter represents a proportion of a first part of the infrared bands under the current environment to the full spectrum, the third infrared-band parameter represents a proportion of a second part of the infrared bands under the current environment to the full spectrum, the first part of the infrared bands is different from the second part of the infrared bands, and the second part of the infrared bands includes waves having wavelengths greater than a wavelength of a maximum wavelength in the first part of the infrared bands.

In the present embodiment, a meaning of the first part of the infrared bands being different from the second part of the infrared bands may be understood to be that the first part of the infrared bands has no overlapping wave band with the second part of the infrared bands. The meaning of the first part of the infrared bands being different from the second part of the infrared bands may also be understood to be that a part of the first part of the infrared bands overlapping with the second part of the infrared bands, and the first part of the infrared bands also has a non-overlapping wave band with the second part of the infrared bands.

B2, in response to the second infrared-band parameter being less than the third infrared-band parameter, the light-source scenario is determined to be an indoor low color-temperature light-source scenario.

In the present embodiment, the electronic device is configured to determine the light-source scenario to be the indoor low color-temperature light-source scenario, in response to determining the second infrared-band parameter being less than the third infrared-band parameter.

B3, in response to the second infrared-band parameter being greater than the third infrared-band parameter, the light-source scenario is determined to be an outdoor low color-temperature light-source scenario.

In the present embodiment, the electronic device is configured to determine the light-source scenario to be the outdoor low color-temperature light-source scenario, in response to determining the second infrared-band parameter being greater than the third infrared-band parameter.

In the present embodiment, the first part of the infrared bands and the second part of the infrared bands constitute a part of the whole infrared bands, or the first part of the infrared bands and the second part of the infrared bands constitute a whole of the whole infrared bands. That is, in practical disclosures, in case that a complete overlap between the first part of the infrared bands and the second part of the infrared bands cannot be realized, the indoor low color-temperature light-source scenario and the outdoor low color-temperature light-source scenario may be accurately distinguished by means of an infrared-band parameter of a non-overlapping part between the first part of the infrared bands and the second part of the infrared bands, so as to realize a purpose of an accurate identification.

It should be noted that, a description of the same operations and the same content in the present embodiment with those in other embodiments may refer to descriptions of the other embodiments, which will not be repeated herein.

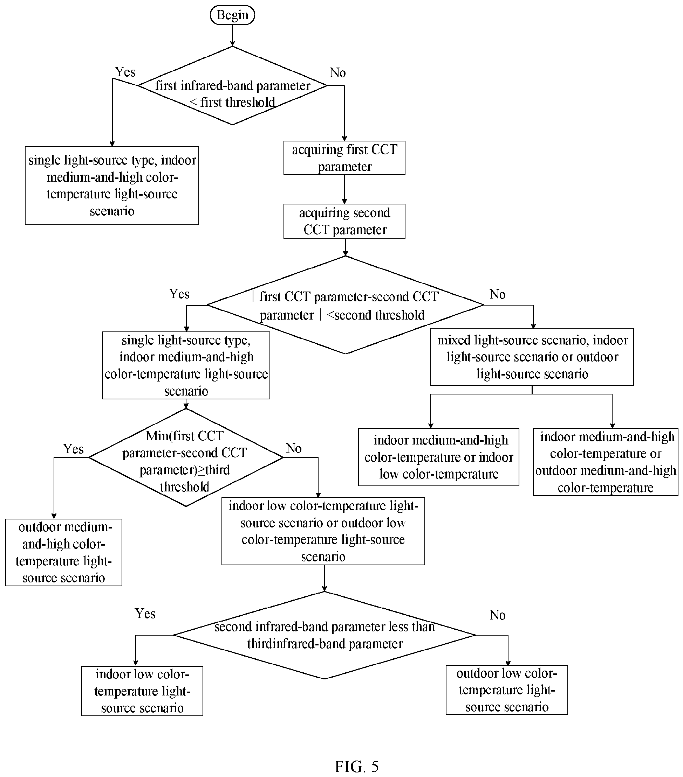

According to the embodiments described above, a further description may be made for the method for determining light-source information provided by the embodiments of the present disclosure, as shown in FIG. 5, the method may include the following operations.

The electronic device is configured to turn on the image sensor and start to execute a process for determining the light-source information.

In a first step, the electronic device is configured to acquire the first infrared-band parameter, such as IR1%, under the current environment output by the image sensor, and determine whether IR1% is less than the first threshold THR1.

In a second step, in response of determining that IR1% is less than the first threshold THR1, the electronic device is configured to determine the current light-source type to be the single light source with a less IR1% amount, and the light-source scenario to be the indoor medium-and-high color-temperature light-source scenario, such as an indoor Fluorescent light source or a LED light source.

In a third step, in response to determining that IR1% is greater than or equal to THR1, the electronic device may be configured to determine the current light-source type may be single light sources in three situations, such as the sunlight light source or the tungsten lamp light source, or a mixed light source of several light sources, which requires a further distinction based on the following operations. In some embodiments, in order to further distinguish, the electronic device is configured to acquire the first CCT parameter such as sensor-CCT output directly by the color-temperature sensor.

In a fourth step, the electronic device is configured to acquire the second CCT parameter, such as IR-CCT, corresponding to the first infrared-band parameter through looking up the linear lookup table.

In a fifth step, the electronic device is configured to acquire an absolute value of a difference between the sensor-CCT and the IR-CCT, and determine whether the absolute value is less than a second threshold THR2 by comparing the absolute value to the THR2

In a sixth step, a case that the electronic device determines the absolute value is less than THR2, it indicates that a sensor-CCT value is relatively close to a IR-CCT value, the sensor-CCT estimated by means of R, G, B color information of the color-temperature sensor is relatively close to the IR-CCT estimated by means of the IR1% amount. It should be noted that inventors have conducted a large number of experimental studies and found that an acquiring manner of IR-CCT is only suitable for single light-source scenarios, that is, the CCT acquired by means of the IR-CCT is only accurate for the single light-source scenarios. For mixed light-source scenarios, an incorrect CCT value may be acquired, which may be quite different from a correct sensor-CCT. That is to say, in a case that the electronic device determines that the absolute value of the difference is less than THR2, it indicates that the current light source is the single light-source type, for example, may be an outdoor medium-and-high color-temperature light source such as a sunlight light source, or an indoor low color-temperature light source such as the tungsten light source, or an outdoor low color-temperature light source.

In a seventh step, in a case that the electronic device determines that the absolute value of the difference is greater than THR2, it indicates that the current light source is the mixed light-source type, such as a mixed light source of an indoor medium-and-high color-temperature light source and the outdoor medium-and-high color-temperature light source, such as the fluorescent lamp, the LED lamp, and the sunlight, or a mixed light source of the indoor medium-and-high color-temperature light source and the indoor low color-temperature light source such as the fluorescent lamp, the LED lamp, and the tungsten lamp.

In an eighth step, the electronic device may distinguish the outdoor medium-and-high color-temperature light source and the indoor low color-temperature light source such as the tungsten lamp light source or the outdoor low color-temperature light source, base on the sensor-CCT and the IR-CCT. In this case, considering the CCT of the tungsten lamp is relatively fixed, may be 2850K, therefore, the electronic device may be configured to compare a magnitude of a minimum value between the sensor-CCT and IR-CCT with a magnitude of the third threshold THR3 .

In a ninth step, the electronic device is configured to determine the light-source scenario to be the outdoor medium-and-high color-temperature light-source scenario, such as the sunlight light light-source scenario, when determining that the minimum value between the sensor-CCT and IR-CCT is greater than or equal to THR3.

In a tenth step, the electronic device is configured to determine the light-source scenario to be the indoor low color-temperature light-source scenario, such as a tungsten lamp light-source scenario, or the outdoor low color-temperature light-source scenario, such as a light-source scenario at a sunrise or a sunset, in response to determining that the minimum value between the sensor-CCT and IR-CCT is less than THR3. It should be noted that, since the tungsten lamp and the low color-temperature sunlight light source are quite similar to each other in the CCT or a color coordinate, the tungsten lamp and the low color-temperature sunlight light source may generally share a set of processing method in a subsequent algorithm processing, and may be classified to one type.

In conclusion, based on three dimensions of information, that is, IR%, sensor-CCT, and IR-CCT obtained from the linear look-up stable of the color-temperature sensor, four types of light sources may be accurately distinguished, and whether the light-source type in the current scenario is the tungsten lamp light source, the fluorescent/LED light source, the sunlight light source, or the mixed light source may be determined.

Based on the above description, after the previous knowledge of the current light-source type, a subsequent image algorithm may be assisted to perform an algorithm-optimized process of distinguishing scenarios, so as to improve a performance of the image algorithm. In the practical disclosures, the method for determining the light-source information provided by the embodiments of the present disclosure may be configured to assist a self-developed AWB algorithm in performing a distinction between indoor/outdoor classification to improve an accuracy of a classification result, such that the AWB algorithm may be configured to better distinguish an indoor scenario and an outdoor scenario, and a possibility of an influence of confusing colors among scenarios may be reduced, so as to realize a better AWB algorithm effect.

In some embodiments, a distinction process for the indoor low color-temperature light source such as the tungsten lamp and the outdoor low color-temperature light source such as the scenario of the sunrise or the sunset may also be performed. As shown in FIG. 5, in this case, the electronic device may have more requirements for a hardware of the color-temperature sensor. The hardware of the color-temperature sensor is required to have two IR channels, that is, a first IR channel and a second IR channel. A spectrum wavelength covered by the first IR channel is relatively close to a visible light region (800-900nm), and a spectrum wavelength covered by the second IR channel is longer (900-1000nm). The first IR channel and the second IR channel may be configured to output proportions of different infrared spectrum bands, for example, the first IR channel may be configured to output a second infrared-band parameter ir1%, and the second IR channel may be configured to output a third infrared-band parameter ir2%. When ir2% is greater than ir1%, the electronic device is configured to determine the current light-source scenario to be the indoor low color-temperature light-source scenario such as the tungsten lamp light-source scenario. When ir2% is less than or equal to ir1%, the electronic device is configured to determine the current light-source scenario to be the outdoor low color-temperature light-source scenario such as a sunlight light source during the sunset.

Based on the above description, it can be seen that the method for determining the light-source information provided by the embodiments of the present disclosure may achieve at least the following effects. The four types of light sources may be effectively distinguished, and whether the light-source type in the current scenario is the tungsten lamp light source, the fluorescent/LED light source, the sunlight light source, or the mixed light source may be determined. A determining accuracy may be rather high, which has been proved by experiments, and may reach more than 90%.

The method for determining the light-source information provided by the embodiments of the present disclosure may achieve a relatively accurate light-source estimation, and may be configured to assist a subsequent algorithm to reduce a possibility of an influence of the confusing colors of other light-source scenarios in a known light-source scenario, and perform a more accurate and more effective process for the light-source scenario. In this way, problems may be dealt with based on different scenarios, and a better algorithm effect may be achieved.

The method for determining the light-source information provided by the embodiments of the present disclosure may be applied to assist the AWB algorithm, and determine whether the current scenario is the indoor or the outdoor based on the light-source type. In some embodiments, the tungsten lamp light source and the fluorescent/LED light source belong to indoor scenarios, and the sunlight light source belongs to the outdoor scenario. In this way, scenarios mistakenly determined by a machine learning classifier in an original AWB algorithm may be corrected, such that the determining accuracy may be improved. More specifically, when the indoor scenario is the fluorescent/LED light source, or when the light source includes only the outdoor sunlight light source, the determining accuracy may be improved and reach substantially 99%, which may achieve the following effects. In a fist aspect, correct and appropriate parameters may be called. In a second aspect, scenarios may be better distinguished in advance, such that a debugger may eliminate an influence of some mistakenly determined scenarios without adding parameters, and may distinguish confusing scenarios or confusing colors without adding the parameters, so as to achieve a better, more stable, and more conveniently to be debugged AWB algorithm effect. Take a typical example, a current indoor scenario with high brightness and high CCT is easily to be mistakenly determined as the outdoor, because the high brightness and the high CCT are typical outdoor features, for example, an OPPO store. However, the light source in the scenario is a fluorescent lamp or an LED, both of which have a low IR%. Wrong determinations may be greatly corrected based on the method for determining the light-source information provided by the embodiments of the present disclosure, and the accuracy of determining to be the indoor scenarios may reach to approximately 99%.

Of course, in addition to the AWB algorithm, the method for determining the light-source information provided by the embodiments of the present disclosure may assist all algorithms needing to distinguish scenarios. For example, the color enhancement algorithm may be assisted. Different mapping curves may be debugged without adopting a light source, and a more accurate color improvement process may be performed for a color under each of the light sources. For example, in the tungsten lamp scenario, consumers generally prefer a yellowish tone. After the light source type is distinguished, a yellowish-color enhancement curve may be debugged separately for the tungsten lamp scenario, while an influence of the yellowish-color enhancement curve on other light-source scenarios do not need to be worried, such that a better algorithm effect of performing a special process for special scenario may be achieved.

It should be noted that, a description of the same operations and the same content in the present embodiment with those of other embodiments may refer to descriptions of the other embodiments, which will not be repeated herein.

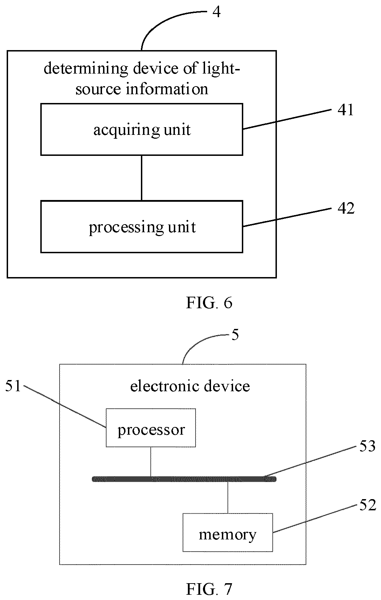

Based on the above embodiments, an electronic device is provided by the embodiments of the present disclosure, and may be applied to the method for determining the light-source information provided by the embodiments corresponding to FIG. 1 and FIG. 2. As shown in FIG. 6, the determining apparatus of the light-source information may include an acquiring unit 41 and a processing unit 42.

The acquiring unit 41 is configured to acquire a first infrared-band parameter under a current environment output by an image sensor. In some embodiments, the first infrared-band parameter is configured to represent a proportion of all infrared bands in the current environment to a full spectrum.

The processing unit 42 is configured to determine a light-source type and a light-source scenario of a light source in the current environment based on the first infrared-band parameter.

In other embodiments of the present disclosure, the processing unit 42 is further configured to, in response to the first infrared-band parameter being less than a first threshold, determine the light-source type to be a single light-source type and the light-source scenario to be an indoor medium-and-high color-temperature light-source scenario.

In other embodiments of the present disclosure, the processing unit 42 is further configured to, in response to the first infrared-band parameter being greater than or equal to a first threshold, acquire a first CCT parameter under the current environment output by the image sensor.

The processing unit 42 is further configured to determine the light-source type and the light-source scenario based on the first infrared-band parameter and the first CCT parameter.

In other embodiments of the present disclosure, the processing unit 42 is further configured to acquire a second CCT parameter under a sunlight light source corresponding to the first infrared-band parameter.

The processing unit 42 is further configured to determine the light-source type and the light-source scenario based on the first CCT parameter and the second CCT parameter.

In other embodiments of the present disclosure, the processing unit 42 is further configured to acquire a linear look-up table. In some embodiments, the linear look-up table includes a plurality of preset infrared-band parameters and a plurality of preset CCT parameters under the sunlight light source, and each of the preset infrared-band parameters has a unique corresponding preset CCT parameter.

The processing unit 42 is further configured to determine a preset CCT parameter corresponding to the first infrared-band parameter being the second CCT parameter, in response to the plurality of preset infrared-band parameters including the first infrared-band parameter.

In other embodiments of the present disclosure, the processing unit 42 is further configured to, in response to the plurality of preset infrared-band parameters not including the first infrared-band parameter, select a first preset infrared-band parameter and a second preset infrared-band parameter from the plurality of preset infrared-band parameters based on a linear difference algorithm.

The processing unit 42 is further configured to determine a first preset CCT parameter corresponding to the first preset infrared-band parameter.

The processing unit 42 is further configured to determine a second preset CCT parameter corresponding to the second preset infrared-band parameter.

The processing unit 42 is further configured to generate the second CCT parameter based on the first infrared-band parameter, the first preset infrared-band parameter, the second preset infrared-band parameter, the first preset CCT parameter, and the second preset CCT parameter.

In other embodiments of the present disclosure, the processing unit 42 is further configured to acquire a value of subtracting the first preset CCT parameter from the second preset CCT parameter and obtain a first difference value.

The processing unit 42 is further configured to acquire a value of subtracting the second preset infrared-band parameter from the first preset infrared-band parameter and obtain a second difference value. The second preset infrared-band parameter is less than the first preset infrared-band parameter.

The processing unit 42 is further configured to acquire a value of subtracting the second preset infrared-band parameter from a first parameter and obtain a third difference value. In some embodiments, the first parameter is obtained by multiplying the first infrared-band parameter by one hundred.

The processing unit 42 is further configured to acquire a product of the first difference and the third difference and obtain a second parameter.

The processing unit 42 is further configured to acquire a value of dividing the second parameter by the second difference and obtain a third parameter.

The processing unit 42 is further configured to acquire a value of subtracting the third parameter from the second preset CCT parameter and obtain the second CCT parameter.

In other embodiments of the present disclosure, the processing unit 42 is further configured to acquire an absolute value of a difference between the first CCT parameter and the second CCT parameter.

The processing unit 42 is further configured to determine a relationship between the absolute value and a second threshold.

The processing unit 42 is further configured to determine the light-source type and the light-source scenario based on the relationship.

In other embodiments of the present disclosure, the processing unit 42 is further configured to, in response to the relationship representing the absolute value is greater than or equal to the second threshold, determine the light-source type is a mixed light-source type and the light-source scenario is an indoor light-source scenario or an indoor-and-outdoor light-source scenario.

In other embodiments of the present disclosure, the processing unit 42 is further configured to, in response to the relationship representing the absolute value is less than the second threshold, determine the light-source type is a single light-source type.

The processing unit 42 is further configured to acquire a minimum value of the first CCT parameter and the second CCT parameter.

The processing unit 42 is further configured to determine the light-source scenario based on the minimum value and a third threshold.

In other embodiments of the present disclosure, the processing unit 42 is further configured to, in response to the minimum value being greater than or equal to the third threshold, determine the light-source scenario is an outdoor medium-and-high color-temperature light-source scenario.

In other embodiments of the present disclosure, the processing unit 42 is further configured to, in response to the minimum value being less than the third threshold, determine the light-source scenario is an indoor low color-temperature light-source scenario or an outdoor low color-temperature light-source scenario.

In other embodiments of the present disclosure, the processing unit 42 is further configured to, in response to the minimum value being less than the third threshold, acquire a second infrared-band parameter and a third infrared-band parameter under the current environment output by the image sensor. The second infrared-band parameter represents a proportion of a first part of the infrared bands under the current environment to the full spectrum, the third infrared-band parameter represents a proportion of a second part of the infrared bands under the current environment to the full spectrum, the first part of the infrared bands is different from the second part of the infrared bands, and the second part of the infrared bands includes waves having wavelengths greater than a wavelength of a maximum wavelength in the first part of the infrared bands.

The processing unit 42 is further configured to, in response to the second infrared-band parameter being less than the third infrared-band parameter, determine the light-source scenario is an indoor low color-temperature light-source scenario.

The processing unit 42 is further configured to, in response to the second infrared-band parameter being greater than the third infrared-band parameter, determine the light-source scenario is an outdoor low color-temperature light-source scenario.

In other embodiments of the present disclosure, the first part of the infrared bands and the second part of the infrared bands constitute a part of the whole infrared bands; or the first part of the infrared bands and the second part of the infrared bands constitute a whole of the whole infrared bands.

It should be noted that, a specific implementation of operations executed by a processor in the present embodiment may refer to an implementation in the method for determining the light-source information provided by the embodiments corresponding to FIGS. 1 to 2, which will not be repeated herein.

Based on the above embodiments, an electronic device is provided by the embodiments of the present disclosure, and may be applied to the method for determining the light-source information provided by the embodiments corresponding to FIGS. 1 to 2. As shown in FIG. 7, the electronic device 5 (the electronic device 5 in FIG. 7 corresponds to the determining apparatus 4 of the light-source information in FIG. 6) includes a processor 51, a memory 52, and a communication bus 53.

The communication bus 53 is configured to connect the memory 52 and the processor 51.

The processor 51 is configured to execute a determined program of light-source information stored in the memory 52 to implement the following operations.

The processor 51 is configured to acquire a first infrared-band parameter under a current environment output by an image sensor.

In some embodiments, the first infrared-band parameter is configured to represent a proportion of all infrared bands in the current environment to a full spectrum.

The processor 51 is configured to determine a light-source type and a light-source scenario of a light source in the current environment based on the first infrared-band parameter.

In other embodiments of the present disclosure, the processor 51 is configured to perform the determined program of the light-source information stored in the memory 52 to implement the following operations.

The processor 51 is further configured to, in response to the first infrared-band parameter being less than a first threshold, determine the light-source type to be a single light-source type and the light-source scenario to be an indoor medium-and-high color-temperature light-source scenario.

In other embodiments of the present disclosure, the processor 51 is configured to perform the determined program of the light-source information stored in the memory 52 to implement the following operations.

The processor 51 is further configured to, in response to the first infrared-band parameter being greater than or equal to a first threshold, acquire a first CCT parameter under the current environment output by the image sensor.

The processor 51 is further configured to determine the light-source type and the light-source scenario based on the first infrared-band parameter and the first CCT parameter.

In other embodiments of the present disclosure, the processor 51 is configured to perform the determined program of the light-source information stored in the memory 52 to implement the following operations.

The processor 51 is further configured to, acquire a second CCT parameter under a sunlight light source corresponding to the first infrared-band parameter.

The processor 51 is further configured to determine the light-source type and the light-source scenario based on the first CCT parameter and the second CCT parameter.

In other embodiments of the present disclosure, the processor 51 is configured to perform the determined program of the light-source information stored in the memory 52 to implement the following operations.

The processor 51 is further configured to, acquire a linear look-up table. In some embodiments, the linear look-up table includes a plurality of preset infrared-band parameters and a plurality of preset CCT parameters under the sunlight light source, and each of the preset infrared-band parameters has a unique corresponding preset CCT parameter.

The processor 51 is further configured to determine a preset CCT parameter corresponding to the first infrared-band parameter being the second CCT parameter, in response to the plurality of preset infrared-band parameters including the first infrared-band parameter.

In other embodiments of the present disclosure, the processor 51 is configured to perform the determined program of the light-source information stored in the memory 52 to implement the following operations.

The processor 51 is further configured to, in response to the plurality of preset infrared-band parameters not including the first infrared-band parameter, select a first preset infrared-band parameter and a second preset infrared-band parameter from the plurality of preset infrared-band parameters based on a linear difference algorithm.

The processor 51 is further configured to, determine a first preset CCT parameter corresponding to the first preset infrared-band parameter.

The processor 51 is further configured to determine a second preset CCT parameter corresponding to the second preset infrared-band parameter.

The processor 51 is further configured to generate the second CCT parameter based on the first infrared-band parameter, the first preset infrared-band parameter, the second preset infrared-band parameter, the first preset CCT parameter, and the second preset CCT parameter.

In other embodiments of the present disclosure, the processor 51 is configured to perform the determined program of the light-source information stored in the memory 52 to implement the following operations.

The processor 51 is further configured to acquire a value of subtracting the first preset CCT parameter from the second preset CCT parameter and obtain a first difference value.

The processor 51 is further configured to acquire a value of subtracting the second preset infrared-band parameter from the first preset infrared-band parameter and obtain a second difference value. The second preset infrared-band parameter is less than the first preset infrared-band parameter.

The processor 51 is further configured to acquire a value of subtracting the second preset infrared-band parameter from a first parameter and obtain a third difference value. In some embodiments, the first parameter is obtained by multiplying the first infrared-band parameter by one hundred.

The processor 51 is further configured to acquire a product of the first difference and the third difference and obtain a second parameter.

The processor 51 is further configured to acquire a value of dividing the second parameter by the second difference and obtain a third parameter.

The processor 51 is further configured to acquire a value of subtracting the third parameter from the second preset CCT parameter and obtain the second CCT parameter.

In other embodiments of the present disclosure, the processor 51 is configured to perform the determined program of the light-source information stored in the memory 52 to implement the following operations.

The processor 51 is further configured to acquire an absolute value of a difference between the first CCT parameter and the second CCT parameter.

The processor 51 is further configured to determine a relationship between the absolute value and a second threshold.

The processor 51 is further configured to determine the light-source type and the light-source scenario based on the relationship.

In other embodiments of the present disclosure, the processor 51 is configured to perform the determined program of the light-source information stored in the memory 52 to implement the following operations.

The processor 51 is further configured to, in response to the relationship representing the absolute value is greater than or equal to the second threshold, determine the light-source type is a mixed light-source type and the light-source scenario is an indoor light-source scenario or an indoor-and-outdoor light-source scenario.

In other embodiments of the present disclosure, the processor 51 is configured to perform the determined program of the light-source information stored in the memory 52 to implement the following operations.

The processor 51 is further configured to, in response to the relationship representing the absolute value is less than the second threshold, determine the light-source type is a single light-source type.

The processor 51 is further configured to acquire a minimum value of the first CCT parameter and the second CCT parameter.

The processor 51 is further configured to determine the light-source scenario based on the minimum value and a third threshold.

In other embodiments of the present disclosure, the processor 51 is configured to perform the determined program of the light-source information stored in the memory 52 to implement the following operations.

The processor 51 is further configured to, in response to the minimum value being greater than or equal to the third threshold, determine the light-source scenario is an outdoor medium-and-high color-temperature light-source scenario.

In other embodiments of the present disclosure, the processor 51 is configured to perform the determined program of the light-source information stored in the memory 52 to implement the following operations.

The processor 51 is further configured to, in response to the minimum value being less than the third threshold, determine the light-source scenario is an indoor low color-temperature light-source scenario or an outdoor low color-temperature light-source scenario.

In other embodiments of the present disclosure, the processor 51 is configured to perform the determined program of the light-source information stored in the memory 52 to implement the following operations.

The processor 51 is further configured to, in response to the minimum value being less than the third threshold, acquire a second infrared-band parameter and a third infrared-band parameter under the current environment output by the image sensor. The second infrared-band parameter represents a proportion of a first part of the infrared bands under the current environment to the full spectrum, the third infrared-band parameter represents a proportion of a second part of the infrared bands under the current environment to the full spectrum, the first part of the infrared bands is different from the second part of the infrared bands, and the second part of the infrared bands includes waves having wavelengths greater than a wavelength of a maximum wavelength in the first part of the infrared bands.

The processor 51 is further configured to, in response to the second infrared-band parameter being less than the third infrared-band parameter, determine the light-source scenario is an indoor low color-temperature light-source scenario.

The processor 51 is further configured to, in response to the second infrared-band parameter being greater than the third infrared-band parameter, determine the light-source scenario is an outdoor low color-temperature light-source scenario.

In other embodiments of the present disclosure, the first part of the infrared bands and the second part of the infrared bands constitute a part of the whole infrared bands; or the first part of the infrared bands and the second part of the infrared bands constitute a whole of the whole infrared bands.

It should be noted that, a specific implementation of operations executed by the processor in the present embodiment may refer to an implementation in the method for determining the light-source information provided by the embodiments corresponding to FIGS. 1 to 2, which will not be repeated herein.

Based on the above embodiments, a computer-readable storage medium is provided and configured to store one or more programs, the one or more programs are configured to be executed by one or more processors to implement operations of the method for determining the light-source information provided by the embodiments corresponding to FIGS. 1 to 2, which will not be repeated herein.

It should be understood by those skilled in the art, the embodiments of the present disclosure may be provided as a method, a system, or a computer program product. Therefore, the present disclosure may adopt a form of a hardware embodiment, a software embodiment, or an embodiment combining a software aspect and a hardware aspect. Furthermore, the present disclosure may adopt a form of a computer program product implemented on one or more computer-usable storage media (including but be not limited to a disk storage, an optical storage, and the like) having computer-usable program codes.

The present disclosure is described with reference to and/or based on flowcharts and/or block diagrams of the method, the apparatus (system), and the computer program product of the embodiments of the present disclosure. It should be understood that each flow and/or block in the flowcharts and/or block diagrams, and a combination of a flow and/or a block in the flowcharts and/or block diagrams, may be implemented by computer program instructions. These computer program instructions may be provided to a processor of a general purpose computer, a special purpose computer, an embedded processor or other programmable data processing devices to obtain a machine such that instructions executed by the processor of a computer or the processors of the other programmable data processing devices may generate a device configured to implement functions specified in one flow or more flows of a flowchart and/or one block or more blocks of a block diagram.

The computer program instructions may also be stored in a computer-readable memory capable of instructing the computer or the other programmable data processing devices to function in a particular manner, such that the instructions stored in the computer-readable memory may generate a manufacture including an instruction device, and the instruction device is configured to implement the functions specified in one flow or more flows of the flowchart and/or one block or more blocks of the block diagram.

These computer program instructions may also be loaded on the computer or the other programmable data processing devices to cause a series of operations to be performed on the computer or other programmable devices to produce a computer-implemented process, such that the instructions executed on the computer or the other programmable devices may provide operations configured to implement the functions specified in one flow or more flows of the flowchart and/or one block or more blocks of the block diagram.

The above descriptions are only preferred embodiments of the present disclosure, and are not intended to limit the protection scope of the present disclosure.

**Claims**

1. A method for determining light-source information, comprising:

    acquiring a first infrared-band parameter under a current environment output by an image sensor, wherein the first infrared-band parameter is configured to represent a proportion of all infrared bands in the current environment to a full spectrum; and
    determining a light-source type and a light-source scenario of a light source in the current environment based on the first infrared-band parameter.

2. The method according to claim 1, wherein the determining a light-source type and a light-source scenario of a light source in the current environment based on the first infrared-band parameter, comprises:
in response to the first infrared-band parameter being less than a first threshold, determining the light-source type is a single light-source type and the light-source scenario is an indoor medium-and-high color-temperature light-source scenario.

3. The method according to claim 1, wherein the determining a light-source type and a light-source scenario of a light source in the current environment based on the first infrared-band parameter, comprises:

    in response to the first infrared-band parameter being greater than or equal to a first threshold, acquiring a first correlated color temperature (CCT) parameter under the current environment output by the image sensor; and
    determining the light-source type and the light-source scenario based on the first infrared-band parameter and the first CCT parameter.

4. The method according to claim 3, wherein the determining the light-source type and the light-source scenario based on the first infrared-band parameter and the first CCT parameter, comprises:

    acquiring a second CCT parameter under a sunlight light source corresponding to the first infrared-band parameter; and
    determining the light-source type and the light-source scenario based on the first CCT parameter and the second CCT parameter.

5. The method according to claim 4, wherein the acquiring a second CCT parameter under a sunlight light source corresponding to the first infrared-band parameter, comprises:

    acquiring a linear look-up table, wherein the linear look-up table comprises a plurality of preset infrared-band parameters and a plurality of preset CCT parameters under the sunlight light source, and each of the preset infrared-band parameters has a unique corresponding preset CCT parameter; and
    determining a preset CCT parameter corresponding to the first infrared-band parameter is the second CCT parameter, in response to the plurality of preset infrared-band parameters comprising the first infrared-band parameter.

6. The method according to claim 5, further comprising:

    in response to the plurality of preset infrared-band parameters not comprising the first infrared-band parameter, selecting a first preset infrared-band parameter and a second preset infrared-band parameter from the plurality of preset infrared-band parameters based on a linear difference algorithm;
    determining a first preset CCT parameter corresponding to the first preset infrared-band parameter;
    determining a second preset CCT parameter corresponding to the second preset infrared-band parameter; and
    generating the second CCT parameter based on the first infrared-band parameter, the first preset infrared-band parameter, the second preset infrared-band parameter, the first preset CCT parameter, and the second preset CCT parameter.

7. The method according to claim 6, wherein the generating the second CCT parameter based on the first infrared-band parameter, the first preset infrared-band parameter, the second preset infrared-band parameter, the first preset CCT parameter, and the second preset CCT parameter, comprises:

acquiring a value of subtracting the first preset CCT parameter from the second preset CCT parameter and obtaining a first difference value;
acquiring a value of subtracting the second preset infrared-band parameter from the first preset infrared-band parameter and obtaining a second difference value, wherein the second preset infrared-band parameter is less than the first preset infrared-band parameter;
acquiring a value of subtracting the second preset infrared-band parameter from a first parameter and obtaining a third difference value, wherein the first parameter is obtained by multiplying the first infrared-band parameter by one hundred;
acquiring a product of the first difference and the third difference and obtaining a second parameter;
acquiring a value of dividing the second parameter by the second difference and obtaining a third parameter; and
acquiring a value of subtracting the third parameter from the second preset CCT parameter and obtaining the second CCT parameter.

8. The method according to claim 4, wherein the determining the light-source type and the light-source scenario based on the first CCT parameter and the second CCT parameter, comprises:

acquiring an absolute value of a difference between the first CCT parameter and the second CCT parameter;
determining a relationship between the absolute value and a second threshold; and
determining the light-source type and the light-source scenario based on the relationship.

9. The method according to claim 8, wherein the determining the light-source type and the light-source scenario based on the relationship, comprises:
in response to the relationship representing the absolute value is greater than or equal to the second threshold, determining the light-source type is a mixed light-source type and the light-source scenario is an indoor light-source scenario or an indoor-and-outdoor light-source scenario.

10. The method according to claim 8, wherein the he determining the light-source type and the light-source scenario based on the relationship, comprises:

in response to the relationship representing the absolute value is less than the second threshold, determining the light-source type is a single light-source type;
acquiring a minimum value of the first CCT parameter and the second CCT parameter; and
determining the light-source scenario based on the minimum value and a third threshold.

11. The method according to claim 10, wherein the determining the light-source scenario based on the minimum value and the second threshold, comprises:
in response to the minimum value being greater than or equal to the third threshold, determining the light-source scenario is an outdoor medium-and-high color-temperature light-source scenario.

12. The method according to claim 10, further comprising:
in response to the minimum value being less than the third threshold, determining the light-source scenario is an indoor low color-temperature light-source scenario or an outdoor low color-temperature light-source scenario.

13. The method according to claim 10, further comprising:

in response to the minimum value being less than the third threshold, acquiring a second infrared-band parameter and a third infrared-band parameter under the current environment output by the image sensor, wherein the second infrared-band parameter represents a proportion of a first part of the infrared bands under the current environment to the full spectrum, the third infrared-band parameter represents a proportion of a second part of the infrared bands under the current environment to the full spectrum, the first part of the infrared bands is different from the second part of the infrared bands, and the second part of the infrared bands comprises waves having wavelengths greater than a wavelength of a maximum wavelength in the first part of the infrared bands;
in response to the second infrared-band parameter being less than the third infrared-band parameter, determining the light-source scenario is an indoor low color-temperature light-source scenario; and
in response to the second infrared-band parameter being greater than the third infrared-band parameter, determining the light-source scenario is an outdoor low color-temperature light-source scenario.

14. The method according to claim 13, wherein the first part of the infrared bands and the second part of the infrared bands constitute a part of the whole infrared bands; or the first part of the infrared bands and the second part of the infrared bands constitute a whole of the whole infrared bands.

15. A determining apparatus of light-source information, comprising:

an acquiring unit, configured to acquire a first infrared-band parameter under a current environment output by an image sensor, wherein the first infrared-band parameter is configured to represent a proportion of all infrared bands in the current environment to a full spectrum; and
a processing unit, configured to determine a light-source type and a light-source scenario of a light source in the current environment based on the first infrared-band parameter.

16. An electronic device, comprising a processor, a memory, and a communication bus, wherein the communication bus is configured to connect the memory and the processor, and the processor is configured to execute a determined program of light-source information stored in the memory to implement operations of the method for determining the light-source information according to any one of claims 1-14.

17. A storage medium, storing one or more programs, wherein the one or more programs are configured to be executed by one or more processors to implement operations of the method for determining the light-source information according to any one of claims 1-14.

a first infrared-band parameter under a current environment outputted by an image sensor is acquired ⌐101

a light-source type and a light-source scenario of a light source in the current environment are determined based on the first infrared-band parameter ⌐102

FIG. 1

a first infrared-band parameter under a current environment outputted by an image sensor is acquired ⌐201

in response to the first infrared-band parameter being less than a first threshold, the light-source type is determined to be a single light-source type and the light-source scenario is determined to be an indoor medium-and-high color-temperature light-source scenario ⌐202

in response to the first infrared-band parameter being greater than or equal to a first threshold, a first relative color-temperature parameter under the current environment output by the image sensor is acquired ⌐203

the light-source type and the light-source scenario are determined based on the first infrared-band parameter and the first CCT parameter ⌐204

FIG. 2

|  |  | IR(%) |
|---|---|---|
| Natural Light | 3200K | 70% |
|  | 4000K | 62% |
|  | 4500K | 58% |
|  | 5000K | 55% |
|  | 5500K | 53% |
|  | 6000K | 53% |
|  | 6500K | 50% |
|  | 7000K | 50% |
|  | 7500K | 49% |
| Fluorescent | F1 | 13% |
|  | F2 | 10% |
|  | F3 | 9% |
|  | F4 | 8% |
|  | F5 | 13% |
|  | F6 | 9% |
|  | F7 | 18% |
|  | F8 | 21% |
|  | F9 | 19% |
|  | F10 | 10% |
|  | F11 | 10% |
|  | F12 | 10% |
| LEDs | Incand_kirei | 18% |
|  | Incand_normal | 16% |
|  | White_Kirei | 15% |
|  | White | 12% |

FIG. 3

| IR% | CCT |
|---|---|
| X1 | 3000K |
| X2 | 3500K |
| X3 | 4000K |
| X4 | 4500K |
| X5 | 5000K |
| X6 | 5500K |
| X7 | 6000K |
| X8 | 6500K |
| X9 | 7000K |
| X10 | 7500K |

FIG. 4

FIG. 5

4

determining device of light-source information

acquiring unit — 41

processing unit — 42

FIG. 6

5

electronic device

51 — processor

53

52 — memory

FIG. 7

## INTERNATIONAL SEARCH REPORT

International application No.

**PCT/CN2020/126037**

### A. CLASSIFICATION OF SUBJECT MATTER

G06T 7/90(2017.01)i

According to International Patent Classification (IPC) or to both national classification and IPC

### B. FIELDS SEARCHED

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNABS, DWPI, CNKI, SIPOABS: 室内, 室外, 环境, 光, 红外, 色温, indoor, outdoor, environment, color temperature, infrared, light

### C. DOCUMENTS CONSIDERED TO BE RELEVANT

| Category* | Citation of document, with indication, where appropriate, of the relevant passages | Relevant to claim No. |
|---|---|---|
| X | CN 1211137 A (MATSUSHITA ELECTRIC INDUSTRY CO., LTD.) 17 March 1999 (1999-03-17) description, page 1, paragraph 5, pages 3-4 | 1-17 |
| X | CN 104848892 A (GUANGDONG XIAOTIANCAI TECHNOLOGY CO., LTD.) 19 August 2015 (2015-08-19) claims 1-4 | 1-2, 15 |
| Y | CN 104848892 A (GUANGDONG XIAOTIANCAI TECHNOLOGY CO., LTD.) 19 August 2015 (2015-08-19) claims 1-4 | 3-14, 16-17 |
| Y | CN 101779109 A (NXP B.V.) 14 July 2010 (2010-07-14) description, paragraphs 0029-0036 | 3-14, 16-17 |
| X | CN 105898260 A (GUANGDONG OPPO MOBILE TELECOMMUNICATIONS CORP., LTD.) 24 August 2016 (2016-08-24) claims 1, 4 and 5 | 1, 2, 15 |
| PX | CN 110827365 A (GUANGDONG OPPO MOBILE TELECOMMUNICATIONS CORP., LTD.) 21 February 2020 (2020-02-21) entire document | 1-17 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 January 2021** | **26 January 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/126037** |

**C.     DOCUMENTS CONSIDERED TO BE RELEVANT**

| Category* | Citation of document, with indication, where appropriate, of the relevant passages | Relevant to claim No. |
| --- | --- | --- |
| A | US 2014132578 A1 (APPLE INC.) 15 May 2014 (2014-05-15)<br>    entire document | 1-17 |
| A | CN 105632413 A (BOE TECHNOLOGY GROUP CO., LTD. et al.) 01 June 2016<br>(2016-06-01)<br>    entire document | 1-17 |
| A | CN 104616633 A (SHANGHAI TYD ELECTRONIC TECHNOLOGY CO., LTD.) 13 May<br>2015 (2015-05-13)<br>    entire document | 1-17 |

Form PCT/ISA/210 (second sheet) (January 2015)

INTERNATIONAL SEARCH REPORT
Information on patent family members

International application No.

**PCT/CN2020/126037**

| Patent document cited in search report | | | Publication date (day/month/year) | Patent family member(s) | | | Publication date (day/month/year) |
|---|---|---|---|---|---|---|---|
| CN | 1211137 | A | 17 March 1999 | JP | H1146367 | A | 16 February 1999 |
| | | | | DE | 19833742 | A1 | 04 February 1999 |
| CN | 104848892 | A | 19 August 2015 | CN | 104848892 | B | 22 September 2017 |
| CN | 101779109 | A | 14 July 2010 | WO | 2009013725 | A1 | 29 January 2009 |
| | | | | US | 2010187406 | A1 | 29 July 2010 |
| | | | | US | 8592744 | B2 | 26 November 2013 |
| | | | | EP | 2201343 | A1 | 30 June 2010 |
| CN | 105898260 | A | 24 August 2016 | CN | 105898260 | B | 19 January 2018 |
| CN | 110827365 | A | 21 February 2020 | | None | | |
| US | 2014132578 | A1 | 15 May 2014 | US | 9129548 | B2 | 08 September 2015 |
| CN | 105632413 | A | 01 June 2016 | US | 2017202070 | A1 | 13 July 2017 |
| | | | | CN | 105632413 | B | 11 September 2018 |
| | | | | US | 10015859 | B2 | 03 July 2018 |
| CN | 104616633 | A | 13 May 2015 | CN | 104616633 | B | 22 March 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911174165X